# EUROPÄISCHE PATENTSCHRIFT

(11) **EP 2 030 858 B1**
(45) Veröffentlichungstag und Bekanntmachung des Hinweises auf die Patenterteilung: **15.03.2017**
(21) Anmeldenummer: 08450116.2
(22) Anmeldetag: 28.07.2008
(51) Int. Cl.: B61B 12/00

(54) **Fahrbetriebsmittel eines Sesselliftes oder einer Seilbahnanlage**
Seat of a chair-lift or a ropeway
Siège d'un télésiège ou d'un téléphérique

(30) Priorität: 30.08.2007 AT 13612007
(43) Veröffentlichungstag der Anmeldung: 04.03.2009
(73) Patentinhaber: Innova Patent GmbH, 6922 Wolfurt (AT)
(72) Erfinder: Switzeny, Kurt, 6440 Brunnen (CH)
(74) Vertreter: Beer & Partner Patentanwälte KG

(56) Entgegenhaltungen:
- EP-A- 0 748 732
- EP-A- 0 808 757
- EP-A- 1 151 903
- EP-A- 1 331 151
- EP-A- 1 396 407
- EP-A- 1 671 867
- EP-A- 1 780 091
- WO-A-2008/020021

## Beschreibung

Die Erfindung betrifft ein Fahrbetriebsmittel eines Sesselliftes oder einer Seilbahnanlage mit einem Rahmen, der mit einer an einem Förderseil gekuppelten Tragstange verbunden ist, einem Schutzbügel, einer Einrichtung zum Schließen des Schutzbügels, einem Energiespeicher, einer Einrichtung zum Laden des Energiespeichers und einer Blockiereinrichtung gegen das Laden des Energiespeichers, wobei die Blockiereinrichtung aktivierbar und deaktivierbar ist und wobei das Öffnen des Schutzbügels im aktiven Zustand der Blockiereinrichtung verhindert ist.

Um ein Herausfallen oder Abrutschen der Fahrgäste von Fahrbetriebsmitteln eines Sesselliftes oder einer Seilbahnanlage zu verhindern, weisen diese Fahrbetriebsmittel Schließ- bzw. Schutzbügel auf. Die Schutzbügel sind von einer Position, in der sie über den Fahrgästen liegen, in eine Position verschwenkbar, in der sich ein Querbügel vor den Fahrgästen über deren Oberschenkel erstreckt. Fahrbetriebsmittel mit einem solchen Schutzbügel sind aus der WO2008/020021A1 bekannt.

Bekannt sind sowohl Schutzbügel, die nicht beim Verlassen einer Station des Sesselliftes oder der Seilbahnanlage automatisch geschlossen werden, als auch solche, die in der Station zwangsweise mittels einer Schiene und einem Kabelzug geschlossen werden. Letztere sind aus der EP 1 780 091 A2 bekannt. Wenn bei letzteren eine Überlastsicherung vorgesehen ist, um zu verhindern, dass Fahrgäste eingeklemmt werden, so wird bei diesen Ausführungsformen eine entsprechend lange Fahrstrecke des Fahrbetriebsmittels zum Schließen des Schutzbügels benötigt. In dieser Fahrstrecke darf die Fahrgeschwindigkeit der Fahrbetriebsmittel nicht zu hoch sein, da sonst die Schließbewegung des Schutzbügels zu schnell ausgeführt wird und damit verbundene Probleme auftreten können.

Nachteilig bei den genannten Schutzbügeln ist, dass bei diesen die Möglichkeit besteht, dass Fahrgäste den Schutzbügel entweder beim Verlassen einer Station nicht schließen oder während der Fahrt von Einstiegsstation bis zu Ausstiegsstation öffnen und sich dadurch in eine Gefahrensituation begeben.

Der Erfindung liegt die Aufgabe zu Grunde, ein Fahrbetriebsmittel der eingangs genannten Gattung zur Verfügung zu stellen, mit dem die genannte Gefahrensituation ausgeschlossen ist.

Gelöst wird diese Aufgabe erfindungsgemäß mit einem Fahrbetriebsmittel, welches die Merkmale des Anspruches 1 aufweist.

Bevorzugte und vorteilhafte Ausführungsformen des erfindungsgemäßen Fahrbetriebsmittels sind Gegenstand der Unteransprüche.

Das erfindungsgemäße Fahrbetriebsmittel ist dadurch gekennzeichnet, dass das Öffnen des Schutzbügels auf wenigstens einem Teil des Weges von seiner vollständig geöffneten Position bis zu seiner vollständig geschlossenen Position durch die Blockiereinrichtung verhindert ist. Somit ist sicher gestellt, dass der Schutzbügel während der gesamten Fahrt von einer Station bis zur nächsten Station geschlossen bleibt, da es nach dem Schließen des Schutzbügels in bzw. kurz nach einer Station nicht ohne weiteres möglich ist, den Schutzbügel wieder zu öffnen. Erst bei der nächsten Station ist das Öffnen des Schutzbügels wieder möglich.

Zum Schutz der Fahrgäste kann der Schließvorgang des Schutzbügels durch geringe Gegenkraft angehalten aber der Schutzbügel nicht wieder geöffnet werden.

In einer besonders bevorzugten Ausführungsform des erfindungsgemäßen Fahrbetriebsmittels sind die Einrichtung zum Schließen des Schutzbügels und die Blockiereinrichtung vorteilhafterweise aus der selben Gruppe von zusammen wirkenden Bauteilen gebildet. Die Einrichtung zum Schließen des Schutzbügels und die Blockiereinrichtung können im Rahmen der Erfindung aber auch aus unterschiedlichen Gruppen von Bauteilen gebildet sein.

Weitere Einzelheiten, Merkmale und Vorteile der Erfindung ergeben sich aus der nachstehenden Beschreibung unter Bezugnahme auf die angeschlossenen Zeichnungen, in welchen eine bevorzugte Ausführungsform der Erfindung dargestellt ist.

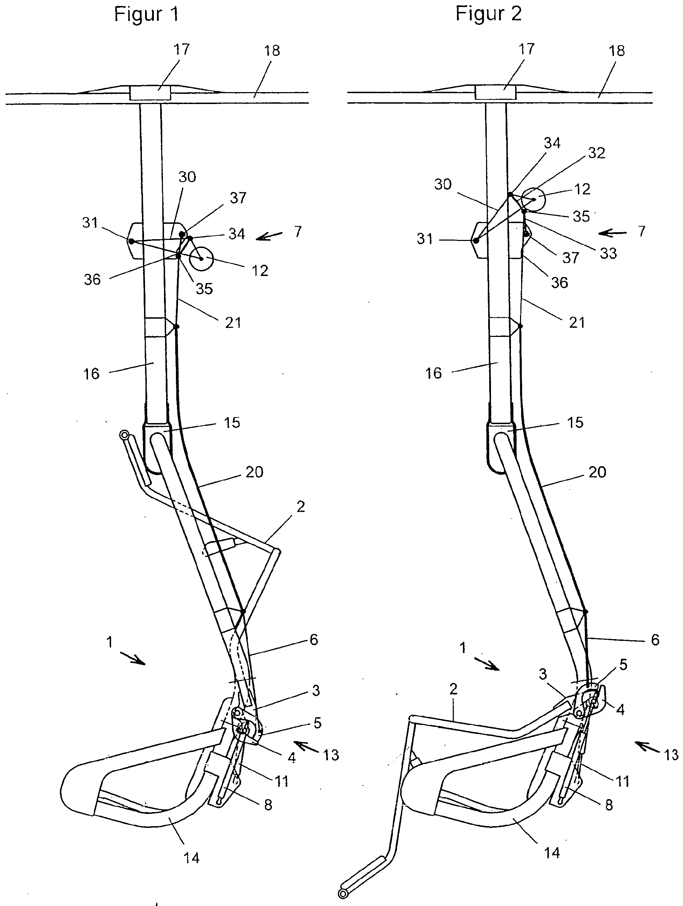

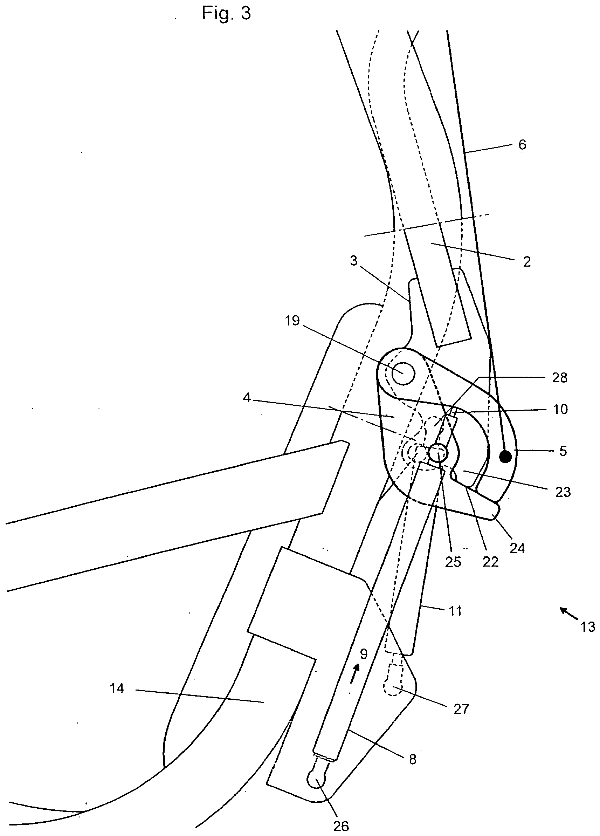

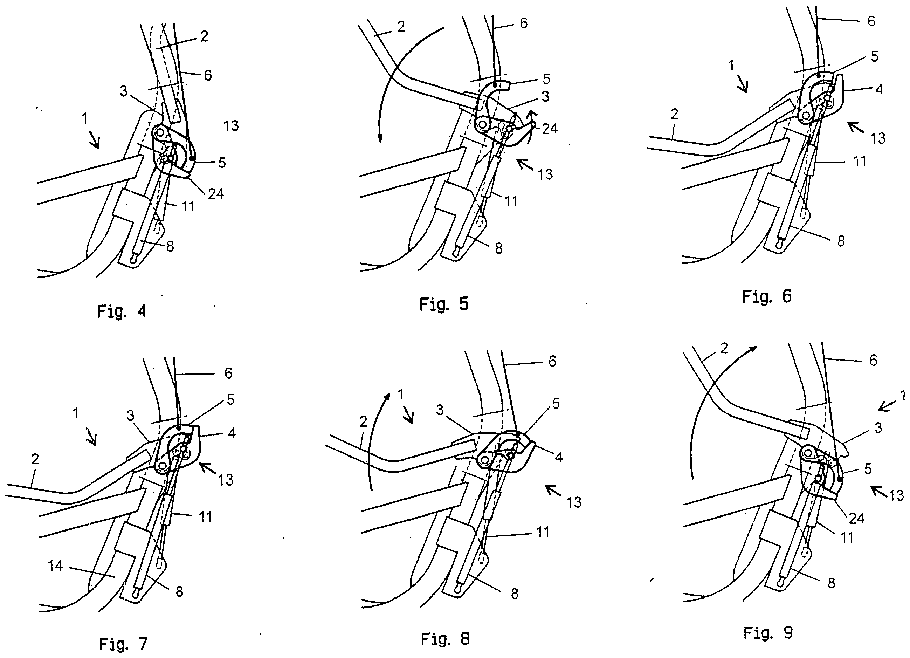

Es zeigt: Fig. 1 einen Sessel eines Sesselliftes mit geöffnetem Schutzbügel, Fig. 2 den Sessel aus Fig. 1 mit geschlossenem Schutzbügel, Fig. 3 ein Detail aus Fig. 1 in einem größeren Maßstab und die Fig. 4 bis 9 das Detail aus Fig. 3 in einzelnen Schritten beim Schließen und Öffnen des Schutzbügels.

In den Fig. 1 und 2 ist ein Sessel 1 eines Sesselliftes mit einem Schutzbügel 2 dargestellt, der eine Einrichtung 7 zum Aktivieren des Schließens des Schutzbügels 2 sowie eine Einrichtung 13 zum Schließen und Blockieren des Öffnens des Schutzbügels 2 aufweist. Die übrigen Teile des Sessels 1 können wie im Stand der Technik üblich ausgeführt sein. Es wird daher nur allgemein erwähnt, dass der Schließbügel 2 an einem Rahmen 14 angeordnet ist, der über ein Gelenk 15 mit einer Tragstange 16 verbunden ist, an deren oberen Ende eine Klemmeinrichtung 17 zum Befestigen des Sessels 1 an ein Förderseil 18 angebracht ist. Die Erfindung ist aber für andere Bauformen von Sesseln, insbesondere kuppelbare Sessel, ebenfalls verwendbar.

Oberhalb des Sessels 1 und vorzugsweise in der Nähe der Klemmeinrichtung 17 ist an der Tragstange 16 die Einrichtung 7 befestigt. Die Einrichtung 7 weist eine Führungsrolle 12 auf und wird angehoben (Fig. 2), wenn der Sessel 1 einen Bereich mit einer der Führungsrolle 12 zugeordneten Führungseinrichtung, insbesondere Führungsschiene, durchfährt, die im Auslaufbereich aus einer Station angeordnet ist. Vor oder im Einlaufbereich der Station ist eine weitere Führungseinrichtung, z.B. Führungsschiene, angeordnet, welche die Führungsrolle 12 wieder in die in Fig. 1 dargestellte Stellung bewegt.

Die Einrichtung 7 weist einen Träger 30 auf, der über ein Lager 31 schwenkbar an der Tragstange 16 gelagert ist. Am gegenüber liegenden Ende ist am Träger 30 die Rolle 12 drehbar gelagert. Die Einrichtung 7 weist des Weiteren einen aus zwei Hebeln 32 und 33 bestehenden Kniehebel auf, wobei ein Hebel 32 über ein Gelenk 34 am Träger 30 und der andere Hebel 33 über ein Gelenk 37 an einer Halterung an der Tragstange 16 schwenkbar gelagert ist. Die beiden Hebel 32 und 33 sind über ein Gelenk 35 miteinander verbunden. Die Einrichtung 7 kann die beiden in den Fig. 1 und 2 dargestellten Endstellungen einnehmen, deren Funktion später noch erläutert werden wird.

Der erfindungsgemäße Aufbau einer bevorzugten Ausführungsform der Einrichtung 13 ist am besten in Fig. 3 ersichtlich. Der Schutzbügel 2 weist einen plattenförmigen Fortsatz 3 auf, über den er am Rahmen 14 über ein Gelenk 19 gelagert ist. Ein erster, unterer Betätigungshebel 4 sowie ein weiterer, oberer Betätigungshebel 5 sind an der gleichen Stelle gelagert. Am oberen Betätigungshebel 5 ist ein Ende einer ersten Stange 6 gelagert. Die Stange 6 ist über einen Bowdenzug 20 mit einer zweiten Stange 21 verbunden, deren Ende an der Einrichtung 7, genauer gesagt mit dem Kniehebelgelenk 35, gelagert ist. Der untere Betätigungshebel 4 weist an seinem freien Ende eine Nase 24 auf, die eine Anlagefläche 22 für ein Ende 23 des Fortsatzes 3 des Schutzbügels 2 bildet. Weiters ist der untere Betätigungshebel 4 über ein Gelenk 25 mit einem Energiespeicher 8 in Form einer Feder verbunden, welche an ihrem gegenüberliegenden Endbereich mit einem Gelenk 26 schwenkbar am Sessel 1, beispielsweise am Rahmen 14 des Sessels 1, gelagert ist. Die Feder 8 kann im Rahmen der Erfindung beispielsweise eine Gasdruckfeder sein, wie nachfolgend beschrieben, die in der Lage ist, sich unter Vergrößerung ihrer Längserstreckung in Pfeilrichtung 9 zu entspannen. Erfindungsgemäß bewirkt das Entspannen der Gasdruckfeder 8 die Schließbewegung des Schutzbügels 2. Wenn sich also die Gasdruckfeder 8 in Pfeilrichtung 9 entspannt, d.h. der Energiespeicher 8 sich entlädt, schwenkt der Schutzbügel 2 nach unten, da der untere Betätigungshebel 4 mit der Anlagefläche 22 gegen das Ende 23 des Fortsatzes 3 am Schutzbügels 2 drückt.

Um die Gasdruckfeder 8 spannen zu können, d.h. ihre Längserstrekkung entgegen der Pfeilrichtung 9 zu verkleinern, weist diese an ihrem oberen, dem oberen Betätigungshebel 5 zugewandten Ende ein Blockiermittel 10 in Form eines Stiftes auf, welcher zuerst durch den Hebel 5 gedrückt werden muss, da die Gasdruckfeder 8 sonst gegen ein Spannen gesperrt ist. Diese Sperre wirkt nur gegen das Spannen der Gasdruckfeder 8 und dies auch nur dann, wenn der Stift 10 nicht gedrückt ist. Wird der Stift 10 wie in Fig. 3 gezeigt durch den oberen Betätigungshebel 5 gedrückt, so kann die Gasdruckfeder 8 bis zu ihrem vollständig gespannten Zustand so lange zusammen gedrückt werden, bis der Schutzbügel 2 ganz geöffnet ist (Fig. 1). Erfindungsgemäß kann der Schutzbügel 2 daher nur durch Spannen der Gasdruckfeder 8 bei gedrücktem Stift 10, d.h. durch Laden des Energiespeichers 8 geöffnet werden. An Stelle der beschriebenen Gasdruckfeder 8 mit dem Stift 10 kann auch jede andere geeignete Form eines Energiespeichers 8 mit einem Blockiermittel 10 verwendet werden, welche den Schutzbügel 2 in Schließrichtung belasten und wenigstens das Öffnen des Schutzbügels 2 bei aktivem Blockiermittel 10 verhindert.

Weiters ist ein Dämpfer 11 vorgesehen, der einerseits am Sessel 1, beispielsweise am Rahmen 14 des Sessels 1, über ein Gelenk 27 und andererseits am Fortsatz 3 des Schutzbügels 2 über ein weiteres Gelenk 28 schwenkbar gelagert ist, und die Geschwindigkeit der Bewegungen des Schutzbügels 2 beim Öffnen und Schließen steuert.

Die zeitliche Abfolge, wie der Schutzbügel 2 von der offenen Position in die geschlossene Position und anschließend wieder in die offene Position verschwenkt wird, wird unter Bezugnahme auf die Fig. 4 bis 9 beschrieben: Fig. 4 zeigt den Schutzbügel 2 in seiner offenen Position gemäß den Fig. 1 und 3. Diese Position hat der Schutzbügel 2 bei der Durchfahrt des Sessels 1 durch eine Station, während Fahrgäste in den Sessel 1 einsteigen und aus dem Sessel 1 aussteigen können. Der Stift 10 wird durch den oberen Betätigungshebel 5 gedrückt, der seinerseits über die Stange 6, den Bowdenzug 20 und die Stange 21 von der Einrichtung 7 (Fig. 1) nach unten gedrückt wird und somit die Gasdruckfeder 8 gespannt hält. Die Nase des 24 unteren Betätigungshebels 4 liegt am Ende 23 des Fortsatzes 3 des Schutzbügels 2 an. In dieser Position befindet sich die Einrichtung 7 in der in Fig. 1 dargestellten Stellung, in welcher das Kniehebelgelenk 35 über einen Totpunkt unter dem Gelenk 37 durchgeschwenkt ist und an einer Anlagefläche 36 der Halterung an der Tragstange 16 anliegt. Somit kann sich die Stange 21 auch unter der Kraft der gespannten Gasdruckfeder 8 nicht mehr nach oben bewegen.

In Fig. 5 ist der Schutzbügel 2 noch teilweise offen. Der Sessel 1 durchfährt bei der Ausfahrt aus der Station allerdings gerade einen Bereich mit einer Führungsschiene, durch welche die Führungsrolle 12 der Einrichtung 7 am Träger 30 nach oben geschwenkt wird. Über den Hebel 33 wird das Kniegelenk 35 aus seiner Totpunktstellung gegen den Uhrzeigersinn herausgedreht, sodass sich die Stange 21 mit dem Bowdenzug 20 und der Stange 6 nach oben bewegt und der obere Betätigungshebel 5 nach oben geschwenkt wird.

Die Stange 6 hebt somit das freie Ende des oberen Betätigungshebels 5 an und hält ihn in dieser Position, so dass der obere Betätigungshebel 5 den unteren Betätigungshebel 4 nicht mehr nach unten drückt und die Gasdruckfeder 8 anfangen kann, sich zu entspannen. Durch das Entspannen der Gasdruckfeder 8 schwenkt der untere Betätigungshebel 4 nach oben und drückt mit seiner Anlagefläche 22 gegen das Ende 23 des Fortsatzes 3 des Schutzbügels 2, so dass der Schutzbügel 2 geschlossen wird.

Bereits in dieser Position des Schutzbügels 2 zeigt sich der erfindungsgemäße Effekt, dass die Schließbewegung des Schutzbügels 2 zwar durch einen Fahrgast gegen die Kraft der Gasdruckfeder 8 gestoppt werden kann, es dem Fahrgast auf Grund der Blockiereinrichtung 13 gegen das Laden des Energiespeichers 8 jedoch nicht mehr möglich ist, den Schutzbügel 2 wieder zu öffnen, da das Zusammendrücken der Gasdruckfeder 8 nur möglich wäre, wenn der Stift 10 durch den Hebel 5 gedrückt wäre.

Fig. 6 zeigt den Schutzbügel 2 in seiner vollständig geschlossenen Position gemäß Fig. 2. Der untere Betätigungshebel 4 ist vollständig nach oben geschwenkt und liegt mit seiner Nase 24 am Ende 23 des Fortsatzes 3 des Schutzbügels 2 an. Der obere Betätigungshebel 5 liegt jedoch nicht am unteren Betätigungshebel 4 an. In dieser Position des Schutzbügels 2 während der Fahrt von einer Station zu einer anderen Station der Sesselliftanlage ist der Stift 10 durch den oberen Betätigungshebel 5 nicht gedrückt, so dass die Gasdruckfeder 8 nicht gespannt und der Schutzbügel 2 somit auch nicht geöffnet werden kann, da der Fortsatz 3 des Schutzbügels 2 gegen eine solche Bewegung durch den unteren Betätigungshebel 4 blockiert ist.

In Fig. 7 ist der Schutzbügel 2 noch geschlossen, jedoch fährt der Sessel 1 bei Einfahrt in eine Station in einen Bereich, in dem die Führungsrolle 12 der Einrichtung 7 und mit ihr die Stange 21, der Bowdenzug 20 und die Stange 6 durch eine Führungsschiene nach unten bewegt werden. Die Stange 6 drückt somit das freie Ende des oberen Betätigungshebels 5 nach unten, so dass der obere Betätigungshebel 5 den Stift 10 drückt und die Gasdruckfeder 8 zum Öffnen des Schutzbügels 2 gespannt werden kann. Fig. 8 zeigt diese Position der Einrichtung 13 beim Vorbeifahren an der Führungsschiene. Die Führungsrolle 12 und damit die Stange 21, der Bowdenzug 20 und die Stange 6 werden immer weiter nach unten bewegt. Dadurch wird auch der obere Betätigungshebel 5 immer weiter nach unten gedrückt, wobei der Stift 10 gedrückt bleibt, und die Gasdruckfeder 8 zusammen gedrückt wird. Dadurch kann der Schutzbügel 2 geöffnet werden.

Für das mechanische Unterstützen des Öffnens des Schutzbügels 2 bis in die in den Fig. 1 und 4 dargestellt Position können aus dem Stand der Technik bekannte Mittel, beispielsweise eine nicht dargestellte Feder, die beim Schließen des Schutzbügels gespannt wird, vorgesehen sein.

Fig. 9 zeigt die Position der Einrichtung 13 beim Durchfahren einer Station nach dem Passieren der Führungsschiene. Die mit der Einrichtung 7 zum Spannen des Energiespeichers 8 und zum Aktivieren des Schließens des Schutzbügels 2 zusammen wirkende Stange 6 bleibt gesenkt und hält den oberen Betätigungshebel 5 in Position. Der obere Betätigungshebel 5 blockiert somit eine Schwenkbewegung des unteren Betätigungshebels 4 nach oben, womit verhindert wird, dass sich die Gasdruckfeder 8 entspannt und der Schutzbügel 2 unerwünscht geschlossen wird. Der Schutzbügel 2, der in der gezeigten Ausführungsform nicht zwangsweise bzw. mechanisch unterstützt, sondern vom Benutzer von Hand geöffnet wird, ist in Fig. 9 noch nicht ganz geöffnet.

Aus der beschriebenen zeitlichen Abfolge wird deutlich, dass der Schutzbügel 2 während des Schließens und auch nachher permanent gegen eine Öffnungsbewegung blockiert ist, bis die Gasdruckfeder 8 durch Drücken des Stiftes 10 freigegeben wird.

Zusammenfassend kann ein Ausführungsbeispiel der Erfindung wie folgt beschrieben werden:

Ein Fahrbetriebsmittel eines Sesselliftes oder einer Seilbahnanlage hat einen Schutzbügel 2, eine Einrichtung 13 zum Schließen des Schutzbügels 2, einen Energiespeicher 8, eine Einrichtung 7 zum Laden des Energiespeichers 8 und eine Blockiereinrichtung 13 gegen das Laden des Energiespeichers 8. Die Blockiereinrichtung 13 ist aktivierbar und deaktivierbar wobei das Öffnen des Schutzbügels 2 im aktiven Zustand der Blockiereinrichtung 13 verhindert ist. Das Öffnen des Schutzbügels 2 ist auf wenigstens einem Teil des Weges des Schutzbügels 2 von seiner vollständig geöffneten Position bis zu seiner vollständig geschlossenen Position, insbesondere auf dem ganzen Weg, durch die Blockiereinrichtung 13 verhindert.

## Patentansprüche

1. Fahrbetriebsmittel eines Sesselliftes oder einer Seilbahnanlage mit einem Rahmen (14), der mit einer an einem Förderseil (18) kuppelbaren Tragstange (16) verbunden ist, einem Schutzbügel (2), einer Einrichtung (13) zum Schließen des Schutzbügels (2), einem Energiespeicher (8), einer Einrichtung (7) zum Laden des Energiespeichers (8) und einer Blockiereinrichtung (13) gegen das Laden des Energiespeichers (8), wobei die Blockiereinrichtung (13) aktivierbar und deaktivierbar ist und wobei das Öffnen des Schutzbügels (2) im aktiven Zustand der Blockiereinrichtung (13) auf wenigstens einem Teil des Weges von seiner vollständig geöffneten Position bis zu seiner vollständig geschlossenen Position durch die Blockiereinrichtung (13) verhindert ist.

2. Fahrbetriebsmittel nach Anspruch 1, **dadurch gekennzeichnet, dass** das Öffnen des Schutzbügels (2) auf dem ganzen Weg von seiner vollständig geöffneten Position bis zu seiner vollständig geschlossenen Position durch die Blockiereinrichtung (13) verhindert ist.

3. Fahrbetriebsmittel nach Anspruch 1 oder 2, **dadurch gekennzeichnet, dass** die Blockiereinrichtung (13) und die Einrichtung (13) zum Schließen des Schutzbügels (2) aus der selben Gruppe von zusammen wirkenden Bauteilen gebildet sind.

4. Fahrbetriebsmittel nach einem der Ansprüche 1 bis 3, **dadurch gekennzeichnet, dass** die Einrichtung (7) zum Laden des Energiespeichers (8) an der Tragstange (16) angeordnet ist.

5. Fahrbetriebsmittel nach einem der Ansprüche 1 bis 4, **dadurch gekennzeichnet, dass** die Einrichtung (7) zum Laden des Energiespeichers (8) einen verschwenkbar gelagerten Träger (30) aufweist.

6. Fahrbetriebsmittel nach einem der Ansprüche 1 bis 5, **dadurch gekennzeichnet, dass** die Einrichtung (7) zum Laden des Energiespeichers (8) über einen Totpunkt verschwenkbar ist.

7. Fahrbetriebsmittel nach Anspruch 6, **dadurch gekennzeichnet, dass** die Einrichtung (7) zum Laden des Energiespeichers (8) ein Kniehebelgelenk (35) aufweist.

8. Fahrbetriebsmittel nach einem der Ansprüche 1 bis 7, **dadurch gekennzeichnet, dass** die Einrichtung (7) zum Laden des Energiespeichers (8) eine Führungsrolle (12) aufweist.

9. Fahrbetriebsmittel nach einem der Ansprüche 1 bis 8, **dadurch gekennzeichnet, dass** die Blockiereinrichtung (13) einen unteren Hebel (4) und einen oberen Hebel (5) aufweist, dass der untere Hebel (4) an seinem freien Ende eine Anlagefläche (22) für einen Fortsatz (3) des Schutzbügels (2) aufweist, und dass der obere Hebel (5) eine Anlagefläche für ein Blockiermittel (10) gegen ein Laden des Energiespeichers (8) aufweist.

10. Fahrbetriebsmittel nach Anspruch 9, **dadurch gekennzeichnet, dass** der untere Hebel (4) und der obere Hebel (5) am Fortsatz (3) des Schutzbügels (2) gelagert sind.

11. Fahrbetriebsmittel nach Anspruch 9 oder 10, **dadurch gekennzeichnet, dass** der untere Hebel (4) mit dem Energiespeicher (8) verbunden ist.

12. Fahrbetriebsmittel nach einem der Ansprüche 1 bis 11, **dadurch gekennzeichnet, dass** der Energiespeicher (8) schwenkbar am Fahrbetriebsmittel (1) gelagert ist.

13. Fahrbetriebsmittel nach einem der Ansprüche 1 bis 12, **dadurch gekennzeichnet, dass** der Energiespeicher (8) eine Feder, insbesondere eine Gasdruckfeder, ist.

14. Fahrbetriebsmittel nach einem der Ansprüche 1 bis 13, **dadurch gekennzeichnet, dass** die Blockiereinrichtung (13) über eine Mechanik mit der Einrichtung (7) zum Spannen des Energiespeichers (8) in Verbindung steht.

15. Fahrbetriebsmittel nach Anspruch 14, **dadurch gekennzeichnet, dass** die Mechanik eine erste Stange (6), einen Bowdenzug und eine zweite Stange (21) aufweist.

16. Fahrbetriebsmittel nach Anspruch 7 und 15, **dadurch gekennzeichnet, dass** die erste Stange (21) mit dem Kniehebelgelenk (35) verbunden ist.

17. Fahrbetriebsmittel nach Anspruch 15 oder 16, **dadurch gekennzeichnet, dass** die zweite Stange (6) mit dem oberen Hebel (5) verbunden ist.

18. Fahrbetriebsmittel nach einem der Ansprüche 1 bis 17, **dadurch gekennzeichnet, dass** ein Dämpfer (11) schwenkbar am Rahmen (14) und am Schutzbügel (2) angeordnet ist.

19. Fahrbetriebsmittel nach einem der Ansprüche 1 bis 18, **dadurch gekennzeichnet, dass** die Einrichtung (7) zum Spannen des Energiespeichers (8) eine Einrichtung (7) zum Aktivieren des Schließens des Schutzbügels (2) ist.

## Claims

1. Transporting means of a chair lift or a cableway system with a frame (14) connected to a load-bearing bar (16) which can be coupled to a conveying cable (18), a safety bar (2), a device (13) for closing the safety bar (2), an energy store (8), a device (7) for charging the energy store (8) and a blocking device (13) against charging the energy store (8), wherein the blocking device (13) can be activated and deactivated and wherein opening the safety bar (2) while the blocking device (13) is in an active state, is prevented by the blocking means (13) over at least part of the path from its fully open position to its fully closed position.

2. Transporting means according to claim 1, **characterised in that** opening the safety bar (2) is prevented by the blocking device (13) over the entire path from its fully open position to its fully closed position.

3. Transporting means according to claim 1 or 2, **characterised in that** the blocking device (13) and the device (13) for closing the safety bar (2) are formed from the same group of interacting components.

4. Transporting means according to one of claims 1 to 3, **characterised in that** the device (7) for charging the energy store (8) is disposed on the load-bearing bar (16).

5. Transporting means according to one of claims 1 to 4, **characterised in that** the device (7) for charging the energy store (8) comprises a pivotally mounted carrier (30).

6. Transporting means according to one of claims 1 to 5, **characterised in that** the device (7) for charging the energy store (8) can be pivoted past a dead centre.

7. Transporting means according to claim 6, **characterised in that** the device (7) for charging the energy store (8) comprises a toggle joint (35).

8. Transporting means according to one of claims 1 to 7, **characterised in that** the device (7) for charging the energy store (8) comprises a guide roller (12).

9. Transporting means according to one of claims 1 to 8, **characterised in that** the blocking device (13) comprises a lower lever (4) and an upper lever (5), **in that** the lower lever (4) comprises a contact surface (22) at its free end for an extension (3) of the safety bar (2), and **in that** the upper lever (5) comprises a contact surface for a blocking means (10) against charging the energy store (8).

10. Transporting means according to claim 9, **characterised in that** the lower lever (4) and the upper lever (5) are mounted on the extension (3) of the safety bar (2).

11. Transporting means according to claim 9 or 10, **characterised in that** the lower lever (4) is connected to the energy store (8).

12. Transporting means according to one of claims 1 to 11, **characterised in that** the energy store (8) is pivotally mounted on the transporting means (1).

13. Transporting means according to one of claims 1 to 12, **characterised in that** the energy store (8) is a spring, in particular a gas pressure spring.

14. Transporting means according to one of claims 1 to 13, **characterised in that** the blocking device (13) is in contact with the device (7) for tensioning the energy store (8) via a mechanism.

15. Transporting means according to claim 14, **characterised in that** the mechanism comprises a first bar (6), a Bowden cable and a second bar (21).

16. Transporting means according to claims 7 and 15, **characterised in that** the first bar (21) is connected to the toggle joint (35).

17. Transporting means according to claim 15 or 16, **characterised in that** the second bar (6) is connected to the upper lever (5).

18. Transporting means according to one of claims 1 to 17, **characterised in that** a damper (11) is pivotally arranged on the frame (14) and on the safety bar (2).

19. Transporting means according to one of claims 1 to 18, **characterised in that** the device (7) for tensioning the energy store (8) is a device (7) for activating the closing of the safety bar (2).

## Revendications

1. Moyen de déplacement d'un télésiège ou d'un téléphérique, avec un cadre (14) qui est relié avec une barre porteuse (16) susceptible d'être accouplée sur un câble de transport (18), un étrier de sécurité (2), un système (13) destiné à fermer l'étrier de sécurité (2), un accumulateur d'énergie (8), un système (7) destiné à charger l'accumulateur d'énergie (8) et un système de blocage (13) de la charge de l'accumulateur d'énergie (8), le système de blocage (13) étant activable et désactivable et en position active du système de blocage (13), l'ouverture de l'étrier de sécurité (2) étant empêchée par le système de blocage (13) sur au moins une partie de la course de sa position entièrement ouverte à sa position entièrement fermée.

2. Moyen de déplacement selon la revendication 1, **caractérisé en ce que** l'ouverture de l'étrier de sécurité (2) est empêchée par le système de blocage (13) sur toute la course, de sa position totalement ouverte jusque dans sa position totalement fermée.

3. Moyen de déplacement selon la revendication 1 ou 2, **caractérisé en ce que** le système de blocage (13) et le système (13) destiné à fermer l'étrier de sécurité (2) sont formés du même groupe de composants coopérants.

4. Moyen de déplacement selon l'une quelconque des revendications 1 à 3, **caractérisé en ce que** le système (7) destiné à charger l'accumulateur d'énergie (8) est placé sur la barre porteuse (16).

5. Moyen de déplacement selon l'une quelconque des revendications 1 à 4, **caractérisé en ce que** le système (7) destiné à charger l'accumulateur d'énergie (8) comporte un support (30) logé en étant pivotant.

6. Moyen de déplacement selon l'une quelconque des revendications 1 à 5, **caractérisé en ce que** le système (7) destiné à charger l'accumulateur d'énergie (8) est susceptible de pivoter par-delà un point mort.

7. Moyen de déplacement selon la revendication 6, **caractérisé en ce que** le système (7) destiné à charger l'accumulateur d'énergie (8) comporte une articulation à genouillère (35).

8. Moyen de déplacement selon l'une quelconque des revendications 1 à 7, **caractérisé en ce que** le système (7) destiné à charger l'accumulateur d'énergie (8) comporte un galet de guidage (12).

9. Moyen de déplacement selon l'une quelconque des revendications 1 à 8, **caractérisé en ce que** le système de blocage (13) comporte un levier inférieur (4) et un levier supérieur (5), **en ce que** sur son extrémité libre, le levier inférieur (4) comporte une surface d'appui (22) pour un prolongement (3) de l'étrier de sécurité (2) et **en ce que** le levier supérieur (5) comporte une surface d'appui pour un moyen de blocage (10) de la charge de l'accumulateur d'énergie (8).

10. Moyen de déplacement selon la revendication 9, **caractérisé en ce que** le levier inférieur (4) et le levier supérieur (5) sont logés sur le prolongement (3) de l'étrier de sécurité (2).

11. Moyen de déplacement selon la revendication 9 ou 10, **caractérisé en ce que** le levier inférieur (4) est relié avec l'accumulateur d'énergie (8).

12. Moyen de déplacement selon l'une quelconque des revendications 1 à 11, **caractérisé en ce que** l'accumulateur d'énergie (8) est logé en pivotement sur le moyen de déplacement (1).

13. Moyen de déplacement selon l'une quelconque des revendications 1 à 12, **caractérisé en ce que** l'accumulateur d'énergie (8) est un ressort, notamment un ressort à pression de gaz.

14. Moyen de déplacement selon l'une quelconque des revendications 1 à 13, **caractérisé en ce que** le système de blocage (13) est en liaison par l'intermédiaire d'un mécanisme avec le système (7) destiné à tendre l'accumulateur d'énergie (8).

15. Moyen de déplacement selon la revendication 14, **caractérisé en ce que** le mécanisme comporte une première barre (6), un câble Bowden et une deuxième barre (21).

16. Moyen de déplacement selon la revendication 7 et 15, **caractérisé en ce que** la première barre (21) est reliée avec l'articulation à genouillère (35).

17. Moyen de déplacement selon la revendication 15 ou 16, **caractérisé en ce que** la deuxième barre (6) est reliée avec le levier supérieur (5).

18. Moyen de déplacement selon l'une quelconque des revendications 1 à 17, **caractérisé en ce qu'**un amortisseur (11) est placé en étant susceptible de pivoter sur le cadre (14) et sur l'étrier de sécurité (2).

19. Moyen de déplacement selon l'une quelconque des revendications 1 à 18, **caractérisé en ce que** le système (7) destiné à tendre l'accumulateur d'énergie (8) est un système (7) destiné à activer la fermeture de l'étrier de sécurité (2).
